# EUROPEAN PATENT SPECIFICATION

(11) **EP 3 485 307 B1**
(45) Date of publication and mention of the grant of the patent: **27.04.2022**
(21) Application number: 16741590.0
(22) Date of filing: 13.07.2016
(51) Int. Cl.: G02B 6/44

(54) **HAULING GRIP FOR OPTICAL CABLES COMPRISING PRE-CONNECTORIZED OPTICAL FIBERS**
ZIEHGRIFF FÜR OPTISCHE KABEL MIT VORKONTAKTIERTEN OPTISCHEN FASERN
POIGNÉE DE TRACTION POUR CÂBLES OPTIQUES COMPRENANT DES FIBRES OPTIQUES PRÉ-MUNIES DE CONNECTEURS

(43) Date of publication of application: 22.05.2019
(73) Proprietor: Prysmian S.p.A., 20126 Milan (IT)
(72) Inventor: ABBIATI, Fabio, 20126 Milan (IT); FERGNANI, Matteo, 20126 Milan (IT)
(74) Representative: Porta & Consulenti Associati S.p.A.
(86) International application number: PCT/EP2016/066640
(87) International publication number: WO 2018/010783

(56) References cited:
- JP-A- S60 194 408
- US-A- 5 480 203
- US-A1- 2003 063 868
- US-A1- 2013 134 370

## Description

### Technical field

The present invention relates to a hauling grip for optical cables comprising pre-connectorized optical fibers. The present invention also relates to a kit for routing through ducts optical cables which comprise pre-connectorized optical fibers.

### Background art

Optical cables are widely used in a variety of data transmission applications to form networks, such as a FTTH ("Fiber To The Home") network wherein an optical access network provides a number of end customers with broadband communication services from operators.

Typically, a FTTH network comprises a central unit which is connected with one or more distribution boxes which are typically located in the basement of the building where the end customers reside.

The connection between the central unit and the optical distribution box is performed with a cable, commonly known as network cable. From the optical distribution box, each end customer can be directly reached by another optical cable, hereinafter referred to as "drop cable".

Optionally, when the optical distribution box is located in a building having multi dwelling units, for example arranged in a plurality of floors, intermediate optical modules are installed at each floor for receiving an optical cable, hereinafter referred to as "riser cable", which exits the optical distribution box and runs vertically through the building from the basement up to all the building floors. Typically, the riser cable may contain up to 96 optical fibers. The connection between the intermediate optical modules and each customer's apartment is then performed with the drop cable.

For optically cabling a building, a mechanical and optical connection has to be performed within the optical distribution box between the network cable entering the optical distribution box and the drop cable or riser cable exiting the optical distribution box.

In order to allow quick and easy connection, without the need of qualified operators, pre-connectorized optical fibers are used within the optical distribution box for connecting the network cable to the drop cable or riser cable.

Throughout this description and in the following claims, the expression "pre-connectorized optical fiber" is used to indicate an optical fiber having, at least one end thereof, a factory assembled and tested optical connector, wherein the expression "optical fiber" is used to indicate an elongated optical element comprising an optical waveguide, constituted by an optically transmissive core, surrounded by a cladding. The optical waveguide is preferably covered by at least one protective coating layer. Two protective coating layers are preferably provided: a first coating layer (primary coating) is in direct contact with the optical waveguide, while a second coating layer (secondary coating) covers the primary coating. In addition, a buffer layer may cover the optical fiber. The buffer layer may be substantially in contact with the secondary coating (tight buffer) or it may consist of a small tube housing one or more optical fibers (loose buffer).

By factory assembling the connectors, the time required in the field to install and connect the optical fibers is reduced. In addition, the quality of the resulting connection is enhanced since the factory conditions can be more readily controlled than the field conditions.

Optical cables need to be routed in conduits or ducts, already present in the structure of the building or assembled on purpose, that can have small diameters, such as 25, 32 or 41 millimetres.

Routing optical cables in these ducts and conduits requires consideration of the pulling forces applied to the optical fibers and their connectors in order to avoid or minimize fibers and connectors damage.

Pulling grips or other means for applying force may provide appropriate tension to guide the front end of the pre-connectorized optical cable.

Document WO 2008/036994 discloses a hauling shroud for hauling an optical cable along a conduit. The hauling shroud comprises a first housing member and second housing member such that first housing member and second housing member can be joined together to enclose a pre-connectorized connector. Two strengthening elements of the fibre optical cable are coupled together to form a loop that engages two pins of the first housing member. During hauling of the cable along the conduit, the pulling forces are transferred to the strengthening elements.

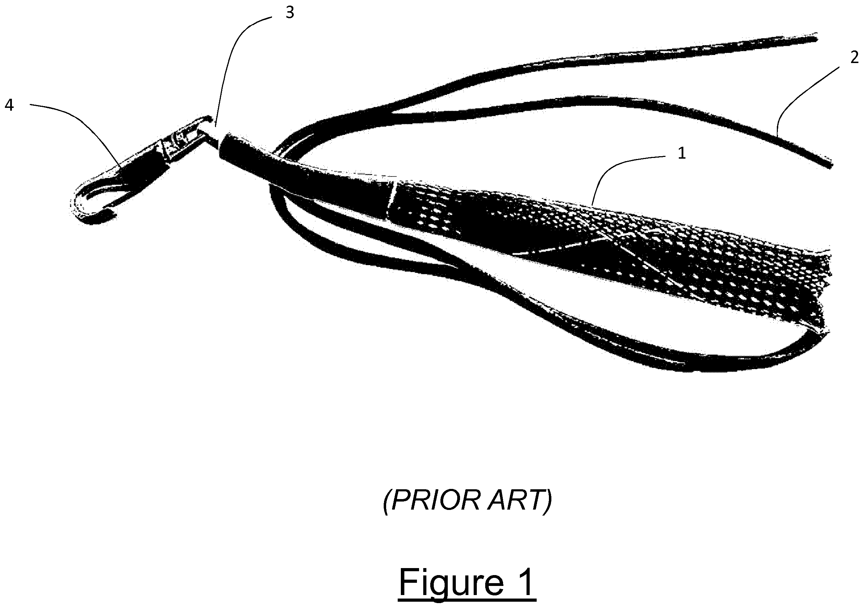

A pulling eye kit sold by Camplex, Division of Tower Products Inc. (http://www.camplex.com/product.aspx?item=PULLEYE-1), whose image is shown in figure 1, comprises a cable netting 1 aimed at protecting connectors of pre-terminated fiber and copper cables and provides a cord 2 to be connected to cable assemblies. The pulling eye kit is intended to be attached to a cable end, with the cable netting covering and protecting the connectors, and thereafter the cord is attached to a so-called "fish-tape" or similar device, to pull the cable through a duct.

US 2013/0134370 discloses a hauling grip according to the preamble of claim 1. US 2003/0063868 discloses a fiber optic cable connector device capable of coupling fiber optic cables for use in installing a fiber optic cable network. JP 60-194408 discloses a protecting device for optical cables with a rope connected to the tension member of the optical cable.

### Summary of the invention

The Applicant has observed that, in a hauling shroud according to WO 2008/036994, the housing enclosing the connector presents a substantial volume and therefore prevents from routing more than one or two connectors within the same conduit or duct. Moreover, the disclosed hauling shroud is expensive and complicated to be installed.

The Applicant has also observed that by using the Camplex pulling eye kit, during installation the installer prefers remaining close to the end of the duct where the pulling eye exits. From such position, when the pulling eye kit exits the duct, the fish-tape becomes no more easily accessible and the operator is therefore induced to grab the cable netting for continuing pulling the cable, thereby causing the cable netting to contract around the connectors and applying a load to the connectors housed inside.

The Applicant has tackled the problem of routing and pulling an optical cable through a duct, preventing the pulling forces applied during cable pulling process from being transmitted also to the optical connectors and/or optical fibers instead to strength member(s) only.

The Applicant has found that by providing a pulling eye assembly comprising a cord separately accessible with respect to the braided sleeving, the whole cable pulling operation can be performed without causing the pulling forces to be applied to fibers and connectors in any phase of the pulling process (either directly or through the sleeving).

The Applicant realized that by arranging a length of the cord connected to the reinforcing yarns of the optical cable outside of the braided sleeving and substantially adjacent thereto, the operator is enabled to apply the pulling force during the routing of the optical cable to the cord during all the phases of the installation, thereby directly transferring the pulling force to the strength members of the optical cable, without mechanically loading the connectors and the optical fibers.

A first aspect of the present invention, therefore, relates to a hauling grip for optical cables according to claim 1.

Preferably, the first end portion of the cord is enclosed inside the first portion of the braided sleeving. In this way, the connecting zone between the cord and the reinforcing yarns of the optical cable is shielded during the routing of the optical cable so preventing the optical cable from possible hooking or shocking during the routing into the duct.

Preferably, the side opening is close to an end portion of the braided sleeving so that the length of the first portion of the cord enclosed inside the braided sleeving is reduced to a minimum extent. Preferably, such an extent is the minimum extent suitable for allowing the connection with the reinforcing yarns of the optical cable to be fully shielded by the braided sleeving.

As above discussed, the intermediate portion of the cord between the side opening of the braided sleeving and the connection with the second portion of the braided sleeving extends outside the braided sleeving. Such a portion of the cord, has a length that is greater than the length, measured along the braided sleeving, between the side opening of the braided sleeving and the region of the second portion of the latter on which the cord is fixedly connected. In this way, the above mentioned portion of cord extends loosely outside the braided sleeving so as to allow an installer to easily grab the same when the optical connector comes out from the duct.

Preferably, the cord comprises a core of reinforcing strings surrounded by a polymeric covering layer. Accordingly, the reinforcing strings of the cord are preferably tied to the reinforcing yarns of the optical cable for connecting the first end portion thereof to the reinforcing yarns of an optical cable.

According to a first embodiment of the invention, the second end portion of the cord extends outside the braided sleeving.

Preferably, the second end portion of the cord forms a closed loop in order to realize a eyelet that can be coupled to a fish tape. The pulling force exerted on the fish tape during the optical cable routing is thus transferred to the cord and, eventually, to the reinforcing yarns of the optical cable.

Alternatively, the second end portion of the cord has a free end that can be tied up to a fish tape.

According to a second embodiment of the invention, the second end portion of the cord comprises reinforcing strings designed for being connected to reinforcing yarns of the optical cable.

Preferably, the reinforcing strings emerging from the second end portion of the cord are designed for being tied to the reinforcing yarns of the optical cable.

Preferably, the connection zone between the reinforcing strings emerging from the second end portion of the cord and the reinforcing yarns of the optical cable coincides with the connection zone between the reinforcing strings emerging from the second end portion of the cord and the reinforcing yarns of the optical cable. Accordingly, the cord forms a closed loop starting and ending at the cited connection zones.

Preferably, the second end portion of the cord is enclosed inside the first portion of the braided sleeving. In this way, similarly to the first end portion of the cord, the connecting zone between the second end portion of the cord and the reinforcing yarns of the optical cable is shielded during the routing of the optical cable so preventing the optical cable from possible hooking or shocking during the routing into the duct.

Preferably, a length of the intermediate portion of the cord adjacent to the second end portion thereof is enclosed inside the first portion of the braided sleeving.

Preferably, the above mentioned length of the intermediate portion of the cord enters in the braided sleeving at a free end of the second portion thereof.

Thus, the intermediate portion of the cord preferably presents a first part extending outside the braided sleeving and arranged side-by-side thereto, a second part extending after the front end portion of the braided sleeving and a third part inserted into the braided sleeving. The two end portions of the cord are both connected to the reinforcing yarns of the optical cable.

Preferably, the cord is connected to the braided sleeving in two distinct and spaced apart regions comprised in the intermediate portion of the cord, so that the cord defines an eyelet extending away from the braided sleeving.

Preferably, the cord is connected to the braided sleeving by means of adhesive tape or any other removable connection element.

A second aspect of the invention relates to an optical cable comprising:
a pre-connectorized optical fiber having a terminal portion emerging from an external sheath of the optical cable;
reinforcing yarns surrounding the optical fiber and emerging from the external sheath of the optical cable;
an optical connector connected to the optical fiber at one end of the terminal portion thereof;
an hauling grip wherein the cord is connected to the reinforcing yarns emerging from the external sheath of the optical cable;
wherein the first portion of the braided sleeving encloses the optical connector and the terminal portion of the optical fiber.

The hauling grip is a hauling grip according to the first or second embodiment above mentioned.

The optical cable preferably comprises one or more optical fibers, possibly arranged inside one or more buffer tubes, an outer sheath and, one or more reinforcing yarns.

The optical cable has an end portion, in particular one or more optical fibers contained therein, pre-terminated with an optical connector.

Alternatively, the optical cable can comprise a group of pre-terminated optical fibers contained therein.

Preferably, the area where the reinforcing yarns of the optical cable and the cord are tied up is surrounded by the first portion of the braided sleeving.

Preferably, the outer sheath of the optical cable is cut back at the zone where the optical cable enters into the braided sleeving so that a leg length is defined for each optical fiber as the distance between the end of the outer sheath and a respective optical connector.

The reinforcing yarns of the optical cable are not cut back at the same distance of the outer sheath of the optical cable, so that the reinforcing yarns can extend beyond the outer sheath for being connected to the reinforcing strings of the cord.

In case of an optical cable having a plurality of optical connectors, the leg lengths of the optical fibers are staggered so that the optical connectors do not superpose or slightly superpose each other.

In this way, all the optical connectors can fit within the diameter of the braided sleeving and can pass through the conduit or duct through which the optical cable is routed.

Preferably, the connectors are evenly staggered within the length of the braided sleeving.

A third aspect of the invention relates to a kit for routing an optical cable comprising:
an optical cable,
a case comprising a winding member on which the optical cable is wound, the case further comprising an aperture from which a first end of the optical cable presenting the hauling grip emerges.

The optical cable is an optical cable according to the second aspect of the invention.

Preferably, the kit comprises an optical termination box to which a second end of the optical cable is coupled, the optical termination box being accommodated into a storing space of the case.

Preferably, the case is a folded blank made of cardboard.

For the purpose of the present description and of the appended claims, use of the "a" or "an" are employed to describe elements and components of the invention. This is done merely for convenience and to give a general sense of the invention. This description should be read to include one or at least one and the singular also includes the plural unless it is obvious that it is meant otherwise.

Further features and advantages of the present invention will appear more clearly from the following detailed description of preferred embodiments thereof, such description being provided merely by way of non-limiting example and being made with reference to the annexed figures wherein:

### Brief description of the drawings

- Figure 1 shows a braided sleeving according to the prior art;
- Figure 2 shows a schematic view, partially in cross-section, of a pre-connectorized optical cable having a hauling grip attached thereto, according to a first embodiment of the present invention;
- Figure 3 shows a schematic view, partially in cross-section, of a pre-connectorized optical cable having a hauling grip attached thereto, according to a second embodiment of the present invention; and
- Figure 4 shows a schematic perspective view of a kit for routing the pre-connectorized optical cables of figure 2 or 3.

### Detailed description

A hauling grip according to the present invention is indicated with the reference number 10 in the annexed figures.

The hauling grip 10 is shown attached to an optical cable 100.

For the purposes of the present description and claims, by optical cable it is meant a cable comprising one or more optical fibers 150, possibly arranged inside one or more buffer tubes, an outer sheath 101 and one or more strength members 102, preferably made of yarns of aramid fibres.

Each optical fiber 150 is pre-terminated with a relevant optical connector 200. In alternative, a multiple connector can be attached to a number of optical fibers.

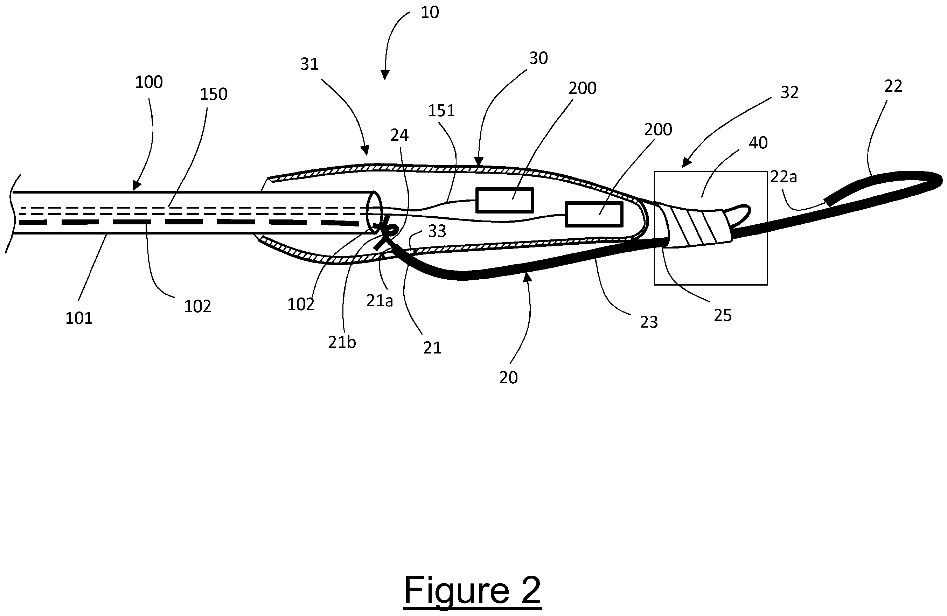

According to the embodiment of figure 2, the hauling grip 10 comprises a cord 20, namely an elongated and flexible element, having a first end portion 21, a second end portion 22 opposite to the first end portion 21 and an intermediate portion 23 extending between the first end portion 21 and second end portion 22. Both the end portions 21, 22 have a corresponding free end 21a, 22a.

The cord 20 comprises a core of reinforcing strings 24 extending along the entire length of the cord, surrounded by a polymeric covering layer 25.

The reinforcing strings 24 of the cord are preferably made of aramid yarns and typically have a diameter comprised between about 0,5 and about 2,5 mm.

The number of reinforcing strings 24 enclosed within the polymeric covering layer 25 is preferably comprised between about 1 and about 6, depending on the desired strength of the cord.

The overall diameter of the cord 20 is typically comprised between about 1 mm and about 5 mm.

The total length of the cord 20 can be up to some meters, as for example 2 or 3 meters.

When the hauling grip is attached to the cable, the reinforcing strings 24 of the cord 20 emerging from the free end 21a of the first end portion 21 are attached to the reinforcing yarns 102 of the optical cable 100, for example by means of a knot 21b or a similar attachment.

The outer sheath 101 of the optical cable 100 is cut at a certain distance from the connectors 200, so that a length 151 for the optical fiber (or fibers) 150 extends between the outer sheath 101 and the connectors 200.

The strength member 102 extends beyond the end of the outer sheath 101 for a length suitable for allowing the operator to tied it up to the reinforcing strings 24 of the cord 20 with the knot 21b.

The hauling grip 10 further comprises a braided sleeving 30, to be fit over the length 151 of the optical fiber 150 and on the connectors 200, and extending over a certain length of the cable sheath 101 (shown in partial cross section in the figures). The braided sleeving 30 can be in the form of a sleeve opened at two opposite ends, or, as in the preferred embodiment of the invention, opened at one end and closed at the opposite end.

The braided sleeving 30 comprises a first portion 31 enclosing the connector 200 and the length of optical cable 100 up to a region preceding the cut end of the outer sheath 101, and a second portion 32 extending beyond the connector 200 in a direction opposite to the optical cable 100. The second portion 32 is preferably closed at its end, while the first portion is opened at its end for allowing the insertion of the braided sleeving 30 over the optical connectors 200. Preferably, the second portion 32 of the braided sleeving 30 corresponds to its front end.

When the hauling grip is attached to the cable 100, the first portion 31 of the braided sleeving 30 encloses the zone wherein the strength member 102 of the optical cable is connected to the reinforcing strings 24 of the cord 20.

In order to avoid the relative movement of the braided sleeving 30 from the optical cable 100, the open end of the first portion 31 of the braided sleeving 30 can be fixedly connected to the optical cable 100, by an adhesive tape or by a heat shrinkable tape (not shown in the figures).

Preferably, the braided sleeving 30 is made of pliable, preferably non-conductive and elastic material, so that it can be stretched out for allowing the connector 200 to be inserted therein and then reassuming its original shape and dimension. The minimum diameter of the braided sleeving 30 is greater than the maximum transversal dimension of the connector 200, so that the connector 200 can move to a certain extent inside the braided sleeving 30.

The first portion 31 of the braided sleeving 30 comprises a side aperture 33, in the form of a slit in its lateral surface, from which the cord 20 passes through the braided sleeving 30 from the interior to the exterior thereof.

In particular, the side aperture 33 is provided close to the zone where the strength member 102 is tied up to the reinforcing strings 24, so that such zone remains inside the braided sleeving 30 and the portion of cord 20 extending away from such zone emerges from the braided sleeving 30.

The intermediate portion 23 of the cord 20 is fixedly connected to the braided sleeving 30 at the second 32 portion thereof, preferably in proximity of the end of the second portion, as illustrated in figure 2, by means of an easily removable connection, such as adhesive or heat shrinkable tape 40. The connection between the cord 20 and the braided sleeving 30 can be removed from an installer when the cable hauling operation has been concluded.

The second end portion 22 of the cord 20, extend away from the second portion 32 of the braided sleeving 30 and can be used for connecting a fish tape or a pulling cable to the cord 20.

To this purpose, although not illustrated, the second end portion 22 of the cord 20 can be closed on itself to form an eyelet, or can be provided with a hook or a snap hook for an easier connection with a fish tape.

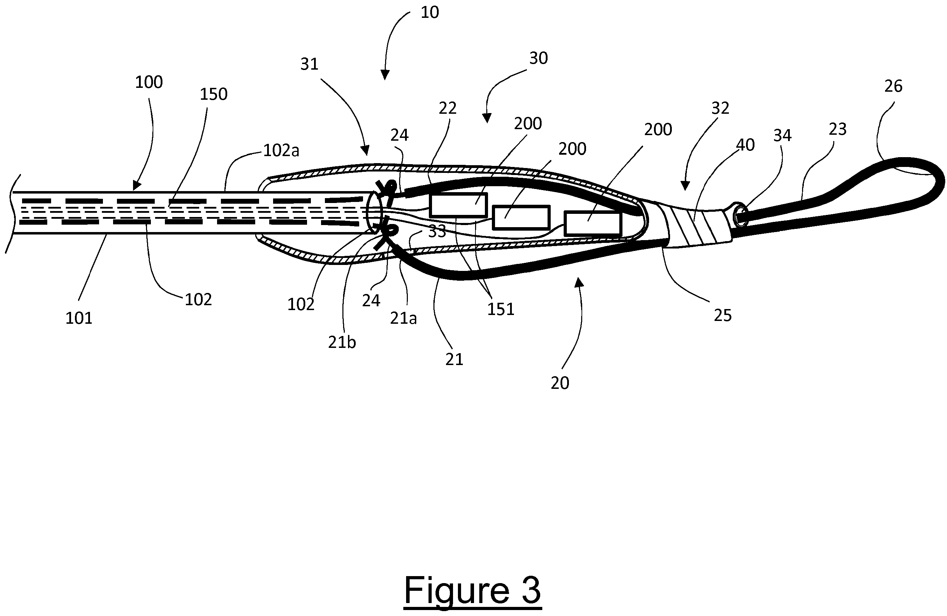

In figure 3 an alternative embodiment is shown, in which the intermediate portion 23 of the cord 20 extends away from the second portion 32 of the braided sleeving 30 and forms a loop 26 and then enters into the braided sleeving at the second portion 32 thereof, preferably in proximity of the end of the second portion 32.

To this end, the second portion 32 of the braided sleeving 30 comprises an aperture 34, preferably a slit, for allowing the cord 20 to enter into the braided sleeving 30.

The intermediate portion 23 of the cord 20 passes through the slit 34 at a point preferably close to the zone wherein the braided sleeving 30 is already connected to the intermediate portion 23 of the cord 20 which enters into the braided sleeving, as illustrated in figure 3.

The portion of cord 20 exiting the braided sleeving 30 by the side aperture 33 is fixedly connected to the braided sleeving 30 itself preferably by the same adhesive tape 40 that fastens the intermediate portion 23 of the cord 20 entering the braided sleeving 30 passing through the slit 34, as indicated in figure 3.

The second end portion 22 of the cord 20, is completely contained within the braided sleeving 30 and extends up to a second strength member 102a of the optical cable 100.

The second end portion 22 is connected, similarly to the first end portion 21, to the strength member 102a of the optical cable 100. In particular, the reinforcing strings 24 emerging from the second end portion 22 of the cord 20 are tied up to the reinforcing yarns 102 of the optical cable 100 with a relevant knot or the like.

As for the reinforcing strings 24 emerging from the first end portion 21 of the cord 20, the first portion 31 of the braided sleeving 30 encloses the zone wherein the reinforcing yarns 102 of the optical cable are connected to the reinforcing strings 24 of the second end portion 22 of the cord 20.

In the embodiment of figure 3, a plurality of optical connectors 200 are provided (three in the illustrated example), each of which connected to corresponding optical fiber 150 of the optical cable 100.

Although not illustrated, also in the embodiment of figure 2 a plurality of optical connectors 200 can be provided, each factory pre-connected to a relevant optical fiber of the optical cable 100.

When a plurality of optical connectors 200 are factory pre-connected to the optical fibers of the optical cable 100, the optical connectors 200 are preferably staggered arranged within the braided sleeving 30, so that the optical connectors 200 can be placed within a braided sleeving 30 without forming any big bulge that can prevent the optical cable from passing through the duct.

To this end, the leg length 151 of the optical fiber 150 (or fibers) connected to an optical connectors 200 is different from the leg lengths 151 of the optical fibers 150 to be connected to another optical connectors 200, as schematically indicated in figure 3.

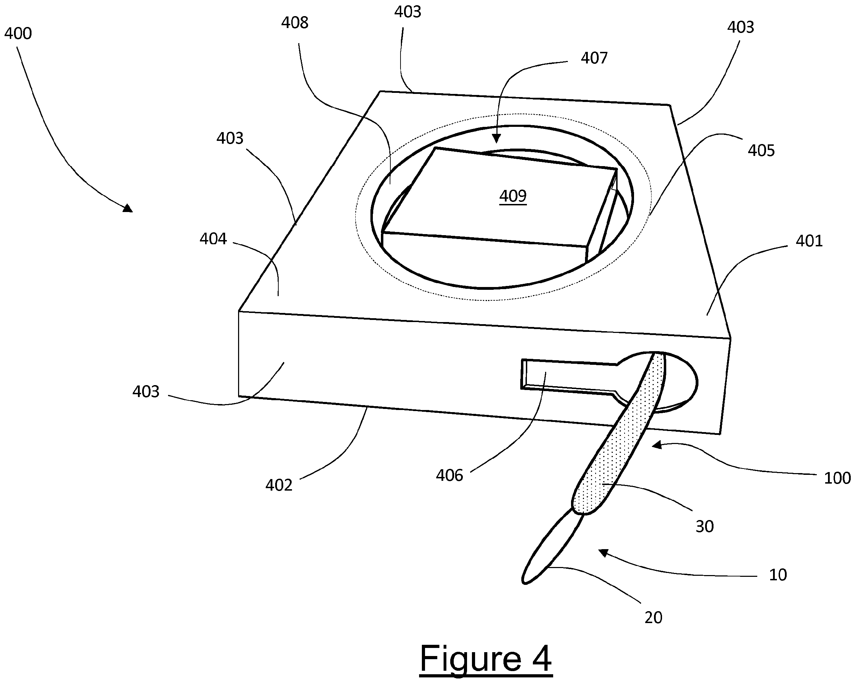

Figure 4 schematically illustrates a kit 400 for routing a pre-connectorized optical cable 100 according to the present invention.

The optical cable 100 comprises a hauling grip 10 according to the first or second embodiment above described.

The kit 400 comprises a case 401 in the form of a box having a base wall 402, four side walls 403 and a top wall 404.

The case 401 contains the optical cable 100 spirally wounded around a winding member 405. The winding member 405 can be a cylindrical wall rotatably mounted on the base wall 402 for rotating within the case 401.

One of the side walls 403 comprises an aperture 406 for allowing the optical cable 100 to be extracted from the case 401. The cable 100 exits from the aperture 406 starting from the hauling grip 10, as illustrated in figure 3.

The top wall 403 presents an opening 407 for allowing to access to a storing space 408 provided within the case 401. The storing space 408 is preferably rotatably coupled with the winding member 405, so that it rotates with the winding member 405.

Within the storing space 408 is positioned an optical termination box 409 connected to the optical cable at an opposite end with respect the end provided with the hauling grip 10.

The optical termination box 409 can be extracted from the storing space 408 by opening the top wall 404 of the case 401. To this end, the top wall 404 is preferably hinged to one side wall 403.

Preferably, the case 401 is made of cardboard folded staring from a cardboard blank. During the blank folding, the optical cable and the optical termination box 409 are inserted into the case.

When in use, the installer connects a fish tape to the closed loop 26 of the cord (in case of the second embodiment) or to the second end portion 22 of the cord (in case of the first embodiment) of the hauling grip 10 which is already mounted on the optical cable. The installer inserts the fish tape into the duct and pulls the end thereof emerging from the duct. During this phase, the pulling force is transmitted to the cord and therefore to the reinforcing yarns of the optical cable. In case of use of the kit 400, the optical cable is unwound from the case 401.

When the braided sleeving 30 emerges from the duct, the installer grabs the intermediate portion 23 of the cord 20 external to the braided sleeving 30 and pulls the same for further exiting the optical cable from the duct. Again, the pulling force is directly transmitted to the reinforcing yarns of the optical cable, so avoiding any force on the optical connectors or on the optical fibres.

When the braided sleeving 30 completely leaves the duct, the installer can removes the adhesive tapes connecting the cord 20 to the second portion 32 of the braided sleeving 30 and the braided sleeving 30 to the optical cable. Then, the braided sleeving 30 can be removed from the optical cable exposing the connectors. The cord 20 can be disconnected from the reinforcing yarns of the optical cable so that the latter is ready for being used.

## Claims

1. Hauling grip (10) for optical cables comprising:
a cord (20) having a first end portion (21), a second end portion (22) opposite to the first end portion (21) and an intermediate portion (23) extending between the first end portion (21) and the second end portion (22);
said first end portion (21) being designed for being connected to reinforcing yarns (102) of an optical cable (100);
a braided sleeving (30) having a first portion (31) designed for enclosing at least one optical connector (200) connected to a pre-connectorized optical fiber (150) of the optical cable (100) and a length of the optical cable, said braided sleeving (30) having a second portion (32) extending away from the first portion (31) in a direction opposite to the length of the optical cable (100);
wherein said cord (20), in its intermediate portion, is connected to said second portion (32) of the braided sleeving (30);
**characterised in that** said braided sleeving (30) comprises a side opening (33) in its first portion (31) and **in that** at least a length of said intermediate portion (23) of the cord (20) emerges from said side opening (33) and extends outside said braided sleeving (30) between the side opening (33) and the connection with the second portion (32) of the braided sleeving (30).

2. Hauling grip (10) according to claim 1 wherein said first end portion (21) of the cord (20) is enclosed inside said first portion (31) of the braided sleeving (30).

3. Hauling grip (10) according to one or more of the preceding claims, wherein said cord (20) comprises a core of reinforcing strings (24) surrounded by a polymeric covering layer (25).

4. Hauling grip (10) according to one or more of the preceding claims, wherein said second end portion (22) of the cord (20) extends outside said braided sleeving (30).

5. Hauling grip (10) according to one or more of claims from 1 to 3, wherein said second end portion (22) of the cord (20) comprises reinforcing strings (24) designed for being connected to reinforcing yarns (102) of the optical cable (100).

6. Hauling grip (10) according to claim 5, wherein said second end portion (22) of the cord (20) is enclosed inside said first portion (31) of the braided sleeving (30).

7. Hauling grip (10) according to claim 5 or 6, wherein a length of said intermediate portion (23) of the cord (20) adjacent to said second end portion (22) thereof is enclosed inside said first portion (31) of the braided sleeving (30).

8. Hauling grip (10) according to one or more of claims from 5 to 7, wherein said cord (20) is connected to said braided sleeving (30) in two distinct and spaced apart regions comprised in the intermediate portion (23) of the cord (20), so that the cord (20) defines an eyelet (26) extending away from the braided sleeving (30).

9. Optical cable (100) comprising:
a pre-connectorized optical fiber (150) having a terminal portion (151) emerging from an external sheath (101) of said optical cable (100);
reinforcing yarns (102) surrounding said optical fiber (150) and emerging from the external sheath (101) of said optical cable (100);
an optical connector (200) connected to the optical fiber (150) at one end of the terminal portion (151) thereof;
an hauling grip (10) according to one or more of claims 1 to 8 wherein the cord (20) is connected to the reinforcing yarns (102) emerging from the external sheath (101) of said optical cable (100);
the first portion (31) of the braided sleeving (30) enclosing the optical connector (200) and the terminal portion of the optical fiber (150).

10. Optical cable (100) according to claim 9 wherein the area where the reinforcing yarns (102) and the cord (20) are tied up is surrounded by said first portion (31) of the braided sleeving (30).

11. Optical cable (100) according to claim 9 or 10 wherein said second end portion (22) of the cord (20) comprises reinforcing strings (24) tied to said reinforcing yarns (102).

12. Kit (400) for routing an optical cable (100) comprising:
one optical cable (100) according to one or more of claims from 9 to 11,
a case (401) comprising a winding member (405) on which one optical cable (100) is wound, said case (401) further comprising an aperture (406) from which a first end of the optical cable (100), presenting a hauling grip (10) according to one or more of claims 1 to 8, emerges.

13. Kit (400) according to claim 12, comprising an optical termination box (409) to which a second end of the optical cable (100) is coupled, said optical termination box (409) being accommodated into a storing space (408) of said case (401).

14. Kit (400) according to claim 12 or 13, wherein said case (401) is a folded blank made of cardboard.

## Patentansprüche

1. Ziehgriff (10) für optische Kabel, umfassend:
Eine Schnur (20) mit einem ersten Endabschnitt (21), einem zweiten Endabschnitt (22) und einem Zwischenabschnitt (23), der sich zwischen dem ersten Endabschnitt (21) und dem zweiten Endabschnitt (22) erstreckt;
wobei der erste Endabschnitt (21) für die Verbindung mit Verstärkungsgarnen (102) eines optischen Kabels (100) ausgelegt ist;
einen geflochtenen Mantel (30) mit einem ersten Abschnitt (31), der dazu bestimmt ist, mindestens einen optischen Verbinder (200), der mit einer vorverbundenen optischen Faser (150) des optischen Kabels (100) verbunden ist, und eine Länge des optischen Kabels aufweist, zu umschließen, wobei der geflochtene Mantel (30) einen zweiten Abschnitt (32) aufweist, der sich von dem ersten Abschnitt (31) in einer Richtung entgegengesetzt zur Länge des optischen Kabels (100) weg erstreckt;
wobei die Schnur (20) in ihrem mittleren Abschnitt mit dem zweiten Abschnitt (32) des geflochtenen Mantels (30) verbunden ist;
**dadurch gekennzeichnet, dass** der geflochtene Mantel (30) eine Seitenöffnung (33) in ihrem ersten Abschnitt (31) aufweist und dass mindestens eine Länge des Zwischenabschnitts (23) der Schnur (20) aus der Seitenöffnung (33) austritt und sich außerhalb des geflochtenen Mantels (30) zwischen der Seitenöffnung (33) und der Verbindung mit dem zweiten Abschnitt (32) der geflochtenen Ummantelung (30) erstreckt.

2. Ziehgriff (10) nach Anspruch 1, bei dem der erste Endabschnitt (21) der Schnur (20) innerhalb des ersten Abschnitts (31) der geflochtenen Ummantelung (30) eingeschlossen ist.

3. Ziehgriff (10) nach einem oder mehreren der vorhergehenden Ansprüche, wobei die Schnur (20) einen Kern aus Verstärkungsschnüren (24) umfasst, die von einer polymeren Deckschicht (25) umgeben sind.

4. Ziehgriff (10) nach einem oder mehreren der vorhergehenden Ansprüche, wobei sich der zweite Endabschnitt (22) der Schnur (20) außerhalb der geflochtenen Ummantelung (30) erstreckt.

5. Ziehgriff (10) nach einem oder mehreren der Ansprüche 1 bis 3, wobei der zweite Endabschnitt (22) der Schnur (20) Verstärkungsfäden (24) aufweist, die dazu bestimmt sind, mit Verstärkungsfäden (102) des optischen Kabels (100) verbunden zu werden.

6. Ziehgriff (10) nach Anspruch 5, wobei der zweite Endabschnitt (22) der Schnur (20) innerhalb des ersten Abschnitts (31) des geflochtenen Mantels (30) eingeschlossen ist.

7. Ziehgriff (10) nach Anspruch 5 oder 6, wobei eine Länge des Zwischenabschnitts (23) der Schnur (20) in der Nähe ihres zweiten Endabschnitts (22) innerhalb des ersten Abschnitts (31) des geflochtenen Mantels (30) eingeschlossen ist.

8. Ziehgriff (10) nach einem oder mehreren der Ansprüche 5 bis 7, wobei die Schnur (20) mit dem geflochtenen Mantel (30) in zwei verschiedenen und voneinander beabstandeten Bereichen verbunden ist, die im Zwischenabschnitt (23) der Schnur (20) enthalten sind, so dass die Schnur (20) eine Öse (26) definiert, die sich von dem geflochtenen Mantel (30) weg erstreckt.

9. Optisches Kabel (100) mit:
Einer vorverbundenen optischen Faser (150) mit einem Endabschnitt (151), der aus einem äußeren Mantel (101) des optischen Kabels (100) herausragt;
Verstärkungsfäden (102), die die optische Faser (150) umgeben und aus dem Außenmantel (101) des optischen Kabels (100) austreten;
einen optischen Verbinder (200), der mit der optischen Faser (150) an einem Ende des Endabschnitts (151) derselben verbunden ist;
einen Ziehgriff (10) nach einem oder mehreren der Ansprüche 1 bis 8, wobei die Schnur (20) mit den aus dem Außenmantel (101) des optischen Kabels (100) austretenden Verstärkungsfäden (102) verbunden ist;
der erste Abschnitt (31) der geflochtenen Mantel (30) den optischen Stecker (200) und den Endabschnitt der optischen Faser (150) umschließt.

10. Optisches Kabel (100) nach Anspruch 9, wobei der Bereich, in dem die Verstärkungsfäden (102) und die Schnur (20) zusammengebunden sind, von dem ersten Abschnitt (31) des geflochtenen Mantels (30) umgeben ist.

11. Optisches Kabel (100) nach Anspruch 9 oder 10, wobei der zweite Endabschnitt (22) der Schnur (20) Verstärkungsfäden (24) umfasst, die mit den Verstärkungsfäden (102) verbunden sind.

12. Bausatz (400) zum Verlegen eines optischen Kabels (100), umfassend:
Ein optisches Kabel (100) nach einem oder mehreren der Ansprüche 9 bis 11, ein Gehäuse (401) mit einem Wickelelement (405), auf das ein optisches Kabel (100) aufgewickelt ist, wobei das Gehäuse (401) ferner eine Öffnung (406) aufweist, aus der ein erstes Ende des optischen Kabels (100), das einen Ziehgriff (10) nach einem oder mehreren der Ansprüche 1 bis 8 aufweist, austritt.

13. Bausatz (400) nach Anspruch 12, umfassend eine optische Abschlussbox (409), an die ein zweites Ende des optischen Kabels (100) gekoppelt ist, wobei die optische Abschlussbox (409) in einem Stauraum (408) des Gehäuses (401) untergebracht ist.

14. Bausatz (400) nach Anspruch 12 oder 13, wobei das Gehäuse (401) ein gefalteter Zuschnitt aus Karton ist.

## Revendications

1. Poignée de traction (10) pour câbles optiques comprenant :
un cordon (20) ayant une première partie d'extrémité (21), une seconde partie d'extrémité (22) opposée à la première partie d'extrémité (21) et une partie intermédiaire (23) s'étendant entre la première partie d'extrémité (21) et la seconde partie d'extrémité (22) ;
ladite première partie d'extrémité (21) étant conçue pour être connectée à des fils de renforcement (102) d'un câble optique (100) ;
un manchon tressé (30) ayant une première partie (31) conçue pour renfermer au moins un connecteur optique (200) connecté à une fibre optique (150) pré-équipée de connecteurs du câble optique (100) et une longueur de câble optique, ledit manchon tressé (30) ayant une seconde partie (32) s'étendant à partir de la première partie (31) dans une direction opposée à la longueur du câble optique (100) ;
dans laquelle ledit cordon (20), dans sa partie intermédiaire, est connecté à ladite seconde partie (32) du manchon tressé (30) ;
**caractérisée en ce que** ledit manchon tressé (30) comprend une ouverture latérale (33) dans sa première partie (31) et **en ce qu'**au moins une longueur de ladite partie intermédiaire (23) du cordon (20) sort de ladite ouverture latérale (33) et s'étend à l'extérieur dudit manchon tressé (30) entre l'ouverture latérale (33) et la connexion avec la seconde partie (32) du manchon tressé (30).

2. Poignée de traction (10) selon la revendication 1, dans laquelle ladite première partie d'extrémité (21) du cordon (20) est enfermée à l'intérieur de ladite première partie (31) du manchon tressé (30).

3. Poignée de traction (10) selon une ou plusieurs des revendications précédentes, dans laquelle ledit cordon (20) comprend une âme de ficelles de renforcement (24) entourée d'une couche de revêtement polymère (25).

4. Poignée de traction (10) selon une ou plusieurs des revendications précédentes, dans laquelle ladite seconde partie d'extrémité (22) du cordon (20) s'étend à l'extérieur dudit manchon tressé (30).

5. Poignée de traction selon une ou plusieurs des revendications 1 à 3, dans laquelle ladite seconde partie d'extrémité (22) du cordon (20) comprend des ficelles de renforcement (24) conçues pour être connectées à des fils de renforcement (102) du câble optique (100).

6. Poignée de traction (10) selon la revendication 5, dans laquelle ladite seconde partie d'extrémité (22) du cordon (20) est enfermée à l'intérieur de ladite première partie (31) du manchon tressé (30).

7. Poignée de traction (10) selon la revendication 5 ou 6, dans laquelle une longueur de ladite partie intermédiaire (23) du cordon (20) adjacente à ladite seconde partie d'extrémité (22) de celui-ci est enfermée à l'intérieur de ladite première partie (31) du manchon tressé (30).

8. Poignée de traction (10) selon une ou plusieurs des revendications 5 à 7, dans laquelle ledit cordon (20) est connecté audit manchon tressé (30) dans deux régions distinctes et espacées comprises dans la partie intermédiaire (23) du cordon (20), de sorte que le cordon (20) définisse un œillet (26) s'étendant à partir du manchon tressé (30).

9. Câble optique (100) comprenant :
une fibre optique (150) pré-équipée de connecteurs ayant une partie terminale (151) sortant d'une gaine externe (101) dudit câble optique (100) ;
des fils de renforcement (102) entourant ladite fibre optique (150) et sortant de ladite gaine externe (101) dudit câble optique (100) ;
un connecteur optique (200) connecté à la fibre optique (150) au niveau d'une extrémité de la partie terminale (151) de celle-ci ;
une poignée de traction (10) selon une ou plusieurs des revendications 1 à 8, dans laquelle le cordon (20) est connecté aux fils de renforcement (102) sortant de la gaine externe (101) dudit câble optique (100) ;
la première partie (31) dudit manchon tressé (30) renfermant le connecteur optique (200) et la partie terminale de la fibre optique (150).

10. Câble optique (100) selon la revendication 9 dans lequel la zone où les fils de renforcement (102) et le cordon (20) sont liés est entourée par ladite première partie (31) du manchon tressé (30).

11. Câble optique (100) selon la revendication 9 ou 10 dans lequel ladite seconde partie d'extrémité (22) du cordon (20) comprend des ficelles de renforcement (24) liées audits fils de renforcement (102).

12. Kit (400) pour acheminer un câble optique (100) comprenant :
un câble optique (100) selon une ou plusieurs des revendications 9 à 11,
un coffret (401) comprenant un élément d'enroulement (405) sur lequel un câble optique (100) est enroulé, ledit coffret (401) comprenant en outre un orifice (406) par lequel une première extrémité du câble optique (100), présentant une poignée de traction (10) selon une ou plusieurs revendications 1 à 8, sort.

13. Kit (400) selon la revendication 12, comprenant un boîtier de terminaison optique (409) auquel une seconde extrémité du câble optique (100) est couplée, ledit boîtier de terminaison optique (409) étant logé dans un espace de stockage (408) dudit coffret (401).

14. Kit (400) selon la revendication 12 ou 13, dans lequel ledit coffret (401) est une découpe pliée fabriquée à partir de carton.
